# FASCICULE DE BREVET EUROPEEN

(11) **EP 3 241 709 B1**
(45) Date de publication et mention de la délivrance du brevet: **23.12.2020**
(21) Numéro de dépôt: 17167871.7
(22) Date de dépôt: 25.04.2017
(51) Int. Cl.: F21V 23/04, F21S 41/14, B60Q 1/00, F21S 41/16, F21S 41/33, F21S 45/70, F21S 41/176, F21S 43/16, F21Y 115/30

(54) **MODULE LUMINEUX COMPORTANT UN ÉLÉMENT LASER**
LEUCHTMODUL, DAS EIN LASERELEMENT UMFASST
LUMINOUS MODULE COMPRISING A LASER ELEMENT

(30) Priorité: 04.05.2016 FR 1654049
(43) Date de publication de la demande: 08.11.2017
(73) Titulaire: Valeo Vision, 93012 Bobigny Cedex (FR)
(72) Inventeur: MORNET, Eric, 93012 Bobigny (FR)
(74) Mandataire: Valeo Vision

(56) Documents cités:
- DE-A1-102014 205 606
- DE-A1-102014 214 601

## Description

### DOMAINE TECHNIQUE DE L'INVENTION

L'invention concerne un module lumineux destiné à émettre un faisceau lumineux comportant un élément laser à semi-conducteur.

L'invention concerne plus particulièrement un module lumineux, notamment pour un véhicule automobile, destiné à émettre un faisceau lumineux sortant et comportant :
- au moins un élément laser à semi-conducteur configuré pour émettre un faisceau laser dans un premier cône de lumière, dit cône d'émission ;
- un élément photoluminescent configuré pour convertir la longueur d'onde d'au moins une partie dudit faisceau laser ;
- une surface réfléchissante dont une portion principale réfléchit de la lumière provenant de l'élément photoluminescent pour former ledit faisceau lumineux sortant orienté dans une première direction d'émission,
- une face secondaire de guidage qui réfléchit la lumière issue du premier cône d'émission dans un deuxième cône de lumière, dit cône de mesure, orienté dans une deuxième direction de mesure ;
- au moins un dispositif de détection d'une lumière incidente dépassant un seuil prédéterminé d'intensité lumineuse qui est agencé dans le cône de mesure.

### ARRIERE PLAN TECHNIQUE DE L'INVENTION

Les éléments laser à semi-conducteur présentent des propriétés très avantageuses, par exemple une surface d'émission de lumière très réduite, ainsi qu'un faisceau laser très intense et très collimaté. Les systèmes optiques pour lumière laser peuvent donc être conçus avec des distances focales beaucoup plus courtes que pour les systèmes utilisant des sources de lumière moins collimatées, par exemple les lampes à incandescence et les diodes électroluminescentes (LEDs). Les systèmes optiques pour lumière laser présentent ainsi un encombrement particulièrement réduit.

Cependant, l'utilisation d'un élément laser à semi-conducteur en tant que source lumineuse pour les modules lumineux de véhicules automobiles pose certains problèmes dus notamment au fait qu'une telle source lumineuse émet un faisceau de lumière cohérente sensiblement monochromatique. Ainsi, le type de laser utilisé pour des applications d'éclairage ou de signalisation embarqués sur un véhicule automobile émet un faisceau laser qui est susceptible de poser certains problèmes de sécurité si le faisceau laser est directement projeté sur la route. Un tel faisceau laser pourrait notamment être nocif pour les yeux d'un observateur.

Par ailleurs, les fonctions d'éclairage ou de signalisation des véhicules automobiles requièrent des faisceaux lumineux présentant une lumière ayant un spectre plus étendu que celui d'un faisceau laser, par exemple une lumière blanche.

Pour résoudre les problèmes de sécurité tout en transformant le faisceau laser en un rayonnement lumineux adapté pour les fonctions d'éclairage ou de signalisation, il est connu d'interposer un élément photoluminescent sur le trajet du faisceau laser. Un tel élément photoluminescent comporte par exemple une substance photoluminescente qui est excitée par de la lumière dont la longueur d'onde correspond à celle du faisceau laser, par exemple du bleu. En conséquence, l'élément photoluminescent émet une lumière dont le spectre lumineux s'étend sur une plage centrée dans le jaune et s'étendant du vert au rouge. Ainsi, au moins une partie de la lumière incidente d'une longueur d'onde donnée est convertie en lumière qui a un spectre de longueurs d'onde plus large et centré autour d'une longueur d'onde complémentaire à la longueur d'onde initiale et qui est émise dans toutes les directions.

De plus, au moins une autre partie de la lumière incidente est dispersée par l'élément photoluminescent. De cette manière, la lumière dispersée et la lumière convertie se superposent additivement, par exemple pour former une lumière blanche.

Pour les raisons de sécurité évoquées précédemment, l'élément photoluminescent revêt une importance particulière. Si l'élément photoluminescent venait à être endommagé ou retiré du trajet du faisceau laser, par exemple suite à un choc, le faisceau laser concentré et non converti risque d'être émis par le module lumineux dans la direction initialement prévue pour le faisceau lumineux sortant. Dans ces cas, des mesures de sécurité doivent être envisagées pour éviter de mettre en danger les usagers de la route.

Une solution envisagée est de placer un dispositif de détection de la longueur d'onde du laser sur le trajet du faisceau laser en aval de l'élément photoluminescent. Ainsi, lorsque l'élément photoluminescent ne remplit plus son rôle, le faisceau laser touche directement le dispositif de détection. Si tel est le cas, l'alimentation de l'élément laser est interrompue par un moyen de pilotage de l'élément laser, par exemple une unité électronique de commande.

Cependant, de tels dispositifs requièrent un agencement précis du dispositif de détection. Cela nécessite notamment une tolérance de positionnement très faible des moyens de guidage de la lumière par rapport au moyens optiques.

De plus, lorsqu'il est touché directement par le faisceau laser, le dispositif de détection est rapidement saturé. Il est donc peu aisé de régler la saturation tout en obtenant une sensibilité de détection suffisante pour l'usage de sécurité précédemment évoqué. Le document DE10 2014 205 606 A1 divulgue un module lumineux connu dans l'art antérieur.

### BREF RESUME DE L'INVENTION

La présente invention propose un module lumineux du type décrit précédemment, caractérisé en ce que la structure optique de la face de guidage provoque un étalement de la lumière pour que le cône de mesure présente un angle d'ouverture supérieur à celui du premier cône d'émission.

La face secondaire de guidage est agencée pour que la deuxième direction de mesure soit distincte de la première direction d'émission, notamment de sorte à ce que la lumière réfléchit par la face de guidage ne participe pas à la formation du faisceau lumineux sortant.

Le profil géométrique de l'enveloppe de la face de guidage provoque un étalement la lumière dans le cône de mesure. Selon d'autres caractéristiques de l'invention:
- la face de guidage comporte des stries qui provoquent l'étalement de la lumière ;
- la face de guidage comporte une série de facettes réfléchissantes adjacentes qui provoquent l'étalement de la lumière ;
- la face de guidage comporte une série de coussins adjacents qui provoquent l'étalement de la lumière ;
- l'état de surface de la face de guidage provoque une diffusion de la lumière dans le cône de mesure ;
- le module lumineux comporte au moins deux dispositifs de détection qui sont chacun agencés dans le cône de mesure ;
- le module lumineux comporte un moyen de pilotage de l'élément laser qui est destiné à interrompre l'émission du faisceau laser lorsque le dispositif de détection détecte une intensité supérieure au seuil prédéterminé ;
- la face de guidage est formée par une portion secondaire de la surface réfléchissante.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique en coupe axiale qui représente un module lumineux avec un élément laser réalisé selon les enseignements de l'invention, le module lumineux émettant un faisceau lumineux sortant ;
- la figure 2 est une vue similaire à celle de la figure 1 qui représente le module lumineux de la figure 1 en cas de dysfonctionnement, le faisceau laser étant réfléchi par une face de guidage vers un dispositif de détection ;
- la figure 3 est une vue de détail à plus grande échelle qui représente la face de guidage de la figure 1 réalisée selon un premier exemple de réalisation de l'invention dans lequel la face de guidage comporte des stries ;
- la figure 4 est une vue similaire à celle de la figure 3 qui représente la face de guidage réalisée selon un deuxième exemple de réalisation de l'invention dans lequel la face de guidage comporte des facettes planes adjacentes ;
- la figure 5 est une vue similaire à celle de la figure 3 qui représente la face de guidage réalisée selon un troisième exemple de réalisation de l'invention dans lequel la face de guidage comporte des facettes adjacentes en forme de coussins ;
- la figure 6 est une vue similaire à celle de la figure 3 qui représente la face de guidage réalisée selon un quatrième exemple de réalisation de l'invention dans lequel la face de guidage est grenée ;
- la figure 7 est une vue similaire à celle de la figure 2 qui représente une variante de réalisation de l'invention dans laquelle le module lumineux comporte deux dispositifs de détection.

### DESCRIPTION DETAILLEE DES FIGURES

Dans la suite de la description des éléments présentant une structure identique ou des fonctions analogues seront désignés par des mêmes références.

Dans la description et les revendications, le terme "cône de lumière" s'applique à l'enveloppe d'un faisceau lumineux. Un tel cône de lumière n'est pas limité aux seuls cônes de révolution. Ainsi on comprendra qu'un cône de lumière peut présenter des sections de formes variées, par exemple ronde, ovoïde, rectangulaire...

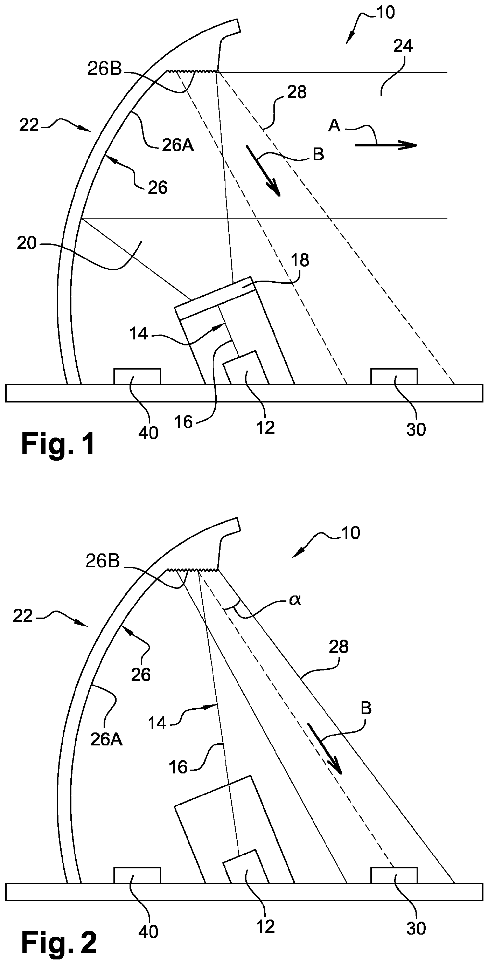

On a représenté à la figure 1 un module 10 lumineux comportant un élément 12 laser à semi-conducteur. L'élément 12 laser est configuré pour émettre un faisceau 14 laser dont l'enveloppe est délimitée par un premier cône 16 de lumière, dit cône 16 d'émission, d'angle d'ouverture très faible resserré autour d'une direction globale d'émission. Par exemple, le cône présente une section de forme elliptique dont l'ouverture varie entre 8° et 40°. A cet égard, dans les dessins, le faisceau laser 14 sera représenté par un simple trait. Il s'agit par exemple d'un faisceau 14 laser de couleur bleu.

Lorsque le module 10 lumineux fonctionne normalement, comme cela est illustré à la figure 1, le faisceau 14 laser est intercepté par un élément 18 photoluminescent qui est agencé sur le trajet du faisceau 14 laser. L'élément 18 photoluminescent est configuré pour convertir la longueur d'onde d'au moins une partie dudit faisceau 14 laser en une lumière incohérente d'une longueur d'onde différente de celle du faisceau 14 laser.

En outre, l'élément 18 photoluminescent est conçu pour disperser la lumière le traversant.

Il s'agit par exemple d'un élément optique comportant un luminophore.

Sous l'effet du faisceau 14 laser, l'élément 18 photoluminescent émet de la lumière distribuée dans un faisceau 20 lumineux secondaire d'angle d'ouverture très large comparativement à celui du faisceau 14 laser. La lumière émise dans le faisceau 20 lumineux secondaire est polychromatique ou blanche, et incohérente. Son intensité lumineuse est réduite par rapport à celle du faisceau 14 laser. Cette lumière ne présente ainsi plus de danger pour les usagers de la route.

Le module 10 lumineux comporte aussi un moyen optique pour transformer la lumière provenant de l'élément 18 photoluminescent en un faisceau 24 lumineux sortant orienté dans une première direction "A" d'émission. Ce faisceau 24 lumineux sortant est orienté vers l'extérieur du véhicule, par exemple vers l'avant, pour réaliser une fonction d'éclairage ou de signalisation.

Le moyen optique est formé par un réflecteur 22 qui présente une surface 26 réfléchissante dont une portion 26A principale est conçue pour transformer, par réflexion, le faisceau 20 secondaire en un faisceau 24 sortant collimaté dans la direction "A" d'émission.

La portion 26A principale forme ainsi une portion de collimation qui présente une ici une forme sensiblement parabolique. A cet effet, l'élément 18 photoluminescent est agencé sensiblement à un foyer de la portion 26A principale de la surface 26 réfléchissante.

Lorsque l'élément 18 photoluminescent n'est plus apte à remplir sa fonction, le faisceau 14 laser, passant à proximité du foyer de la portion 26A principale de la surface 26 réfléchissante, risque d'être renvoyé par cette dernière dans la direction "A" d'émission.

Pour éviter une telle situation, une face réfléchissante de guidage est interposée dans la trajectoire du premier cône 16 d'émission. La face de guidage est agencée pour réfléchir au moins une partie de la lumière émise dans ledit cône 16 d'émission pour former un faisceau lumineux de mesure qui est délimité par un deuxième cône 28 de lumière orienté vers une deuxième direction "B" déterminée de mesure, dit par la suite "cône 28 de mesure".

La face de guidage est agencée pour que la deuxième direction "B" de mesure soit distincte de la première direction "A" d'émission, notamment de sorte à ce que la lumière réfléchit par la face de guidage ne participe pas à la formation du faisceau 24 lumineux sortant.

La face de guidage est portée de manière fixe par le réflecteur. La face de guidage est formée par une portion 26B secondaire de la surface 26 réfléchissante qui réfléchit la lumière issue du cône 16 d'émission dans le cône 28 de mesure. La portion 26B secondaire de surface réfléchissante est ainsi réalisée en une seule pièce avec la portion 26A principale de surface réfléchissante.

Avantageusement, la portion 26B secondaire est agencée à une extrémité aval de la surface 26 réfléchissante selon le sens de projection du faisceau 24 lumineux sortant.

En variante, la face de guidage est réalisée par une face de réflexion d'un élément rapporté sur la portion principale de surface réfléchissante, par exemple un prisme.

En outre, le module 10 lumineux est aussi équipé d'au moins un dispositif 30 de détection d'une lumière incidente dépassant un seuil prédéterminé d'intensité lumineuse, dit "seuil de sécurité" par la suite. A cet effet, le dispositif 30 de détection présente une surface sensible à la lumière. Le dispositif 30 de détection est conçu pour détecter une augmentation de l'intensité de la radiation lumineuse au-delà dudit seuil de sécurité. Il s'agit d'un seuil de sécurité en-deçà duquel le rayonnement lumineux est sans danger pour la sécurité des usagers de la route.

En variante, le dispositif de détection est conçu pour mesurer de manière absolue l'intensité lumineuse du rayonnement lumineux détecté.

Le dispositif 30 de détection comporte ici une photodiode.

Le dispositif 30 de détection est agencé de manière à détecter la lumière qui est réfléchie dans le cône 28 de mesure. A cet effet, le dispositif 30 de détection est agencé dans le cône 28 de mesure. Le cône 28 de mesure est ainsi dirigé vers la surface sensible du dispositif 30 de détection.

Le module 10 lumineux comporte en outre un moyen 40 de pilotage, par exemple une unité électronique de commande, qui est apte à commander la désactivation de l'élément 12 laser, par exemple en coupant l'alimentation électrique de l'élément 12 laser.

La surveillance de l'intensité lumineuse des rayons lumineux compris dans le cône 28 de mesure permet de contrôler que l'élément 18 photoluminescent rempli correctement son rôle.

Lorsque le module 10 lumineux fonctionne normalement, comme illustré à la figure 1, la lumière issue du faisceau 14 laser a été convertie et dispersée par l'élément 18 photoluminescent avant d'être émise vers la surface 26 réfléchissante pour former le faisceau 24 lumineux sortant. La portion 26B secondaire prélève une partie des rayons lumineux, qui présentent ainsi les mêmes propriétés que les rayons lumineux formant le faisceau 24 lumineux sortant. Ces rayons lumineux sont réfléchis dans le cône 28 de mesure dans la direction "B" de mesure orientée vers la surface sensible du dispositif 30 de détection. Ainsi, la lumière incidente sur le dispositif 30 de détection présente une intensité lumineuse modérée qui est inférieure au seuil de sécurité, garantissant un usage sécurisé du module 10 lumineux.

En revanche, le moyen 40 de pilotage est conçu pour désactiver l'élément 12 laser lorsque l'intensité lumineuse des rayons lumineux contenus dans le cône 28 de mesure excède le seuil de sécurité.

La figure 2 représente le module 10 lumineux lorsque l'élément 18 photoluminescent ne remplit plus sa fonction. L'élément 18 photoluminescent a par exemple été délogé de son emplacement suite à un choc. Il n'est ainsi plus agencé sur le trajet du faisceau 14 laser. En l'absence de l'élément 18 photoluminescent, le faisceau 14 laser dont l'intensité lumineuse est potentiellement dangereuse vient frapper directement la portion 26B secondaire qui est agencée dans le cône 16 d'émission.

Au moins une partie du faisceau 14 laser est réfléchie dans le cône 28 de mesure dans la direction "B" de mesure orientée directement vers la surface sensible du dispositif 30 de détection. Les rayons lumineux atteignant la surface sensible du dispositif 30 de détection présentent alors une intensité lumineuse qui n'a sensiblement pas été atténuée par rapport à la sortie du faisceau 14 laser. Ainsi, l'intensité lumineuse des rayons lumineux déviés par l'élément 36 optique vers le dispositif 30 de détection dépasse le seuil de sécurité.

Le dépassement du seuil de sécurité est communiqué par le dispositif 30 de détection au moyen 40 de pilotage. En réaction, le moyen 40 de pilotage désactive l'élément 12 laser. De cette manière, le moyen 40 de pilotage interrompt la production du faisceau 14 laser, empêchant tout rayonnement lumineux nocif de sortir du module 10 lumineux.

Lorsque la portion 26B secondaire comporte une surface réfléchissante sensiblement plane et lisse, le cône 28 de mesure présente un angle d'ouverture identique à celui du cône 16 d'émission. De ce fait, la zone éclairée par le faisceau de mesure au niveau du support du dispositif de détection est très faible. Ceci impose de positionner le dispositif de détection de manière très précise par rapport au réflecteur 26.

En outre, dans une telle disposition, lorsque le faisceau laser est réfléchi directement par la portion 26B secondaire de surface réfléchissante, l'intensité lumineuse du faisceau de mesure est extrêmement élevée par rapport celle du faisceau de lumière correctement convertie par l'élément photoluminescent. Il en résulte un risque élevé de saturation du dispositif de détection. Il est donc nécessaire de régler le dispositif de détection de manière à ce qu'il ne sature pas tout en conservant une sensibilité de détection suffisante. Une telle opération est extrêmement délicate.

Pour résoudre ces problèmes, l'invention propose que la portion 26B secondaire de surface 26 réfléchissante comporte des moyens d'étalement de la lumière pour que le cône 28 de mesure présente un angle d'ouverture supérieur à celui du premier cône 16 d'émission. Ainsi le faisceau lumineux de mesure réfléchi est très divergent par rapport au faisceau laser.

La portion 26B secondaire de surface réfléchissante comporte ainsi des moyens pour étaler la lumière sortante dans le cône 28 de mesure par réflexion ou par diffusion, au moins dans un plan, avec un angle d'ouverture α qui est sensiblement supérieur à l'angle d'ouverture presque nul du cône 16 d'émission. Le cône 28 de mesure est ainsi divergent depuis la face 26B de guidage vers le dispositif 30 de détection.

Il en résulte que l'aire éclairée au niveau du support du dispositif de détection est plus grande. Ainsi, la tolérance de positionnement du dispositif de détection par rapport à la portion 26B secondaire de surface réfléchissante est augmentée.

En outre, lorsque la portion 26B secondaire de surface réfléchissante est exposée directement au faisceau laser, l'intensité lumineuse du faisceau de mesure réfléchi est légèrement diminuée par rapport à celle du faisceau laser émis dans le cône 16 d'émission. Ceci permet de faciliter le réglage de la saturation du dispositif de détection.

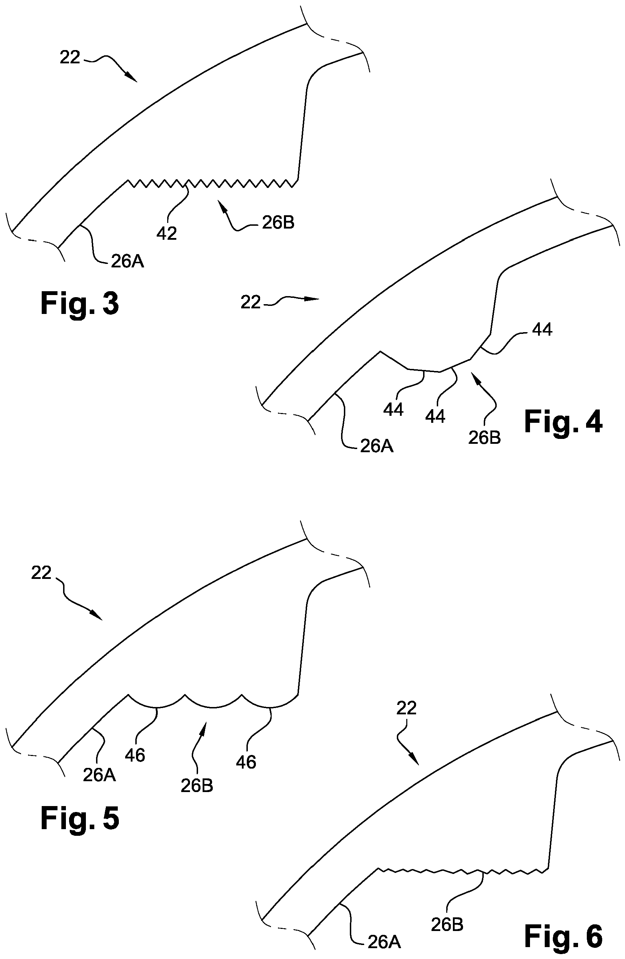

Selon un premier mode de réalisation de l'invention représenté à la figure 3 à 5, le profil géométrique de l'enveloppe de la portion 26B secondaire de surface réfléchissante est conçu pour provoquer un étalement la lumière dans le cône 28 de mesure. La portion 26B secondaire de surface réfléchissante est ainsi structurée pour distribuer la lumière dans le cône 28 de mesure.

Selon un premier exemple de ce premier mode de réalisation représenté à la figure 3, la portion 26B secondaire de surface réfléchissante comporte des stries 42 qui provoquent l'étalement de la lumière dans au moins une direction transversale.

Selon un deuxième de ce premier mode de réalisation représenté à la figure 4, la portion 26B secondaire de surface réfléchissante comporte une série de facettes 44 réfléchissantes adjacentes qui provoquent l'étalement de la lumière. Les facettes 44 sont planes et elles forment des angles les unes avec les autres.

Selon un troisième exemple de ce premier mode de réalisation, la portion 26B secondaire de surface réfléchissante comporte une série de facettes adjacentes en forme de coussins 46 qui provoquent l'étalement de la lumière.

Selon un deuxième mode de réalisation de l'invention, l'état de surface de la portion 26B secondaire de surface réfléchissante provoque une diffusion de la lumière dans le cône 28 de mesure.

Ainsi, comme représenté à la figure 6, la portion 26B secondaire de surface réfléchissante est par exemple grenée pour diffuser la lumière dans le deuxième cône 28 de mesure.

Comme représenté à la figure 2, le dispositif 30 de détection peut être agencé dans l'axe principal du cône 28 de mesure ou légèrement désaxé tout en restant à l'intérieur du cône 28 de mesure.

L'invention permet avantageusement de répartir de manière homogène la lumière incidente sur la totalité de la surface sensible du dispositif 30 de détection. Ceci permet de simplifier énormément le réglage de la saturation du dispositif 30 de détection.

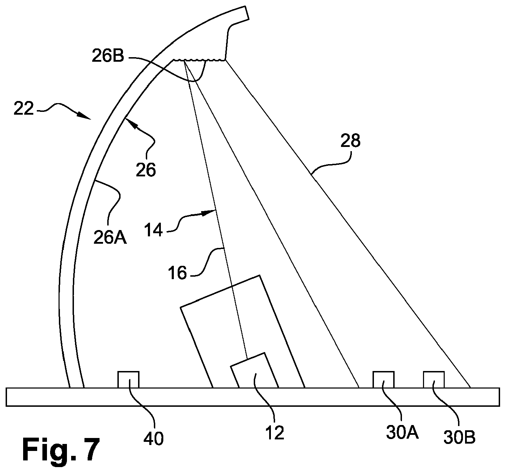

Une variante de réalisation de l'invention a été représenté à la figure 7. Le module 10 lumineux comporte ici plusieurs dispositifs de détection de l'intensité lumineuse. Tous les dispositifs de détection sont agencés dans le cône 28 de mesure.

Dans l'exemple représenté à la figure 7, il comporte deux dispositifs 30A, 30B de détection. Chaque dispositif 30A, 30B de détection est apte à communiquer avec le moyen 40 de pilotage pour permettre de désactiver l'élément 12 laser lorsqu'un dépassement du seuil de sécurité est détecté par l'un et/ou l'autre des dispositifs 30A, 30B de détection.

Chacun de ces dispositifs 30A, 30B de détection est agencé dans le cône 28 de mesure. Les deux dispositifs 30A, 30B sont ici agencés de manière désaxée par rapport à l'axe principal du cône 28 de mesure.

La présence des deux dispositifs 30A, 30B de détection permet de détecter de manière redondante l'intensité des rayons lumineux du cône 28 de mesure. Il est ainsi possible de diagnostiquer le défaut de fonctionnement de l'un des dispositifs 30A, 30B de détection lorsque les dispositifs 30A, 30B de détection communiquent des informations contradictoires au moyen 40 de pilotage.

Le module 10 lumineux réalisé selon les enseignements de l'invention permet ainsi de donner une liberté dans la tolérance de positionnement du dispositif 30 de détection par rapport à la portion 26B secondaire. En effet, l'étalement de la lumière dans un cône lumineux plus ouvert permet de disposer d'une plus grande surface éclairée dans laquelle le dispositif 30 de détection peut être agencé.

De plus, la possibilité d'obtenir un faisceau de mesure présentant un angle d'ouverture plus large permet d'éclairer la totalité de la surface sensible du dispositif 30 de détection, facilitant ainsi le réglage de sa saturation.

En outre, lorsque l'angle d'ouverture est conçu pour être suffisamment large, il est possible d'agencer deux dispositifs 30 de détection dans un même faisceau de mesure. Ainsi, le module 10 lumineux fonctionne de manière beaucoup plus sécurisée.

## Revendications

1. Module (10) lumineux, notamment pour un véhicule automobile, destiné à émettre un faisceau (24) lumineux sortant et comportant :
- au moins un élément (12) laser à semi-conducteur configuré pour émettre un faisceau (14) laser dans un premier cône (16) de lumière, dit cône (16) d'émission ;
- un élément (18) photoluminescent configuré pour convertir la longueur d'onde d'au moins une partie dudit faisceau (14) laser ;
- une surface (26) réfléchissante dont une portion (26A) principale réfléchit de la lumière provenant de l'élément (18) photoluminescent pour former ledit faisceau (24) lumineux sortant orienté dans une première direction (A) d'émission,
- une face (26B) secondaire de guidage qui réfléchit la lumière issue du premier cône (16) d'émission dans un deuxième cône (28) de lumière, dit cône (28) de mesure, orienté dans une deuxième direction (B) de mesure ;
- au moins un dispositif (30) de détection d'une lumière incidente dépassant un seuil prédéterminé d'intensité lumineuse qui est agencé dans le cône (28) de mesure ;
la structure optique de la face (26B) de guidage provoquant un étalement de la lumière pour que le cône (28) de mesure présente un angle d'ouverture supérieur à celui du premier cône (16) d'émission.
**caractérisé en ce que** le profil géométrique de l'enveloppe de la face (26B) de guidage provoque un étalement la lumière dans le cône (28) de mesure.

2. Module lumineux selon la revendication précédente, **caractérisé en ce que** la face (26B) de guidage comporte des stries (42) qui provoquent l'étalement de la lumière.

3. Module (10) lumineux selon la revendication 1, **caractérisé en ce que** la face (26B) de guidage comporte une série de facettes (44) réfléchissantes adjacentes qui provoquent l'étalement de la lumière.

4. Module (10) lumineux selon la revendication 1, **caractérisé en ce que** la face (26B) de guidage comporte une série de coussins (46) adjacents qui provoquent l'étalement de la lumière.

5. Module (10) lumineux selon l'une quelconque des revendications 1 à 4, **caractérisé en ce qu'**il comporte au moins deux dispositifs (30A, 30B) de détection qui sont chacun agencés dans le cône (28) de mesure.

6. Module (10) lumineux selon l'une quelconque des revendications précédentes, **caractérisé en ce qu'**il comporte un moyen (40) de pilotage de l'élément (12) laser qui est destiné à interrompre l'émission du faisceau (14) laser lorsque le dispositif (30) de détection détecte une intensité supérieure au seuil prédéterminé.

7. Module (10) lumineux selon l'une quelconque des revendications précédentes, **caractérisé en ce que** la face de guidage est formée par une portion (26B) secondaire de la surface (26) réfléchissante.

## Patentansprüche

1. Beleuchtungsmodul (10), insbesondere für ein Kraftfahrzeug, zum Aussenden eines austretenden Lichtstrahls (24) mit :
- mindestens ein Halbleiterlaserelement (12), das so konfiguriert ist, dass es einen Laserstrahl (14) in einen ersten Lichtkegel (16), genannt Emissionskegel (16), emittiert;
- ein photolumineszierendes Element (18), das so konfiguriert ist, dass es die Wellenlänge von mindestens einem Teil des Laserstrahls (14) umwandelt;
- eine reflektierende Oberfläche (26), von der ein Hauptteil (26A) Licht von dem photolumineszierenden Element (18) reflektiert, um den ausgehenden Lichtstrahl (24) zu bilden, der in einer ersten Emissionsrichtung (A) orientiert ist,
- eine sekundäre Leitfläche (26B), die das von dem ersten Emissionskegel (16) kommende Licht in einen zweiten Lichtkegel (28), genannt Messkegel (28), reflektiert, der in einer zweiten Messrichtung (B) ausgerichtet ist;
- mindestens eine Vorrichtung (30) zur Detektion von einfallendem Licht, das eine vorbestimmte Lichtintensitätsschwelle überschreitet, die im Messkegel (28) angeordnet ist;
die optische Struktur der Leitfläche (26B), die eine Ausbreitung des Lichts bewirkt, so dass der Messkegel (28) einen größeren Öffnungswinkel als der erste Emissionskegel (16) hat.
**dadurch gekennzeichnet, dass** das geometrische Hüllprofil der Führungsfläche (26B) eine Lichtausbreitung im Messkegel (28) bewirkt.

2. Beleuchtungsmodul nach dem vorhergehenden Anspruch, **dadurch gekennzeichnet, dass** die Leitfläche (26B) Rillen (42) aufweist, die eine Ausbreitung des Lichts bewirken.

3. Beleuchtungsmodul (10) nach Anspruch 1, **dadurch gekennzeichnet, dass** die Leitfläche (26B) eine Reihe benachbarter reflektierender Facetten (44) aufweist, die eine Ausbreitung des Lichts bewirken.

4. Beleuchtungsmodul (10) nach Anspruch 1, **dadurch gekennzeichnet, dass** die Leitfläche (26B) eine Reihe von benachbarten Kissen (46) umfasst, die eine Ausbreitung des Lichts bewirken.

5. Beleuchtungsmodul (10) nach einem der Ansprüche 1 bis 4, **dadurch gekennzeichnet, dass** es mindestens zwei Detektionsvorrichtungen (30A, 30B) umfasst, die jeweils im Messkegel (28) angeordnet sind.

6. Beleuchtungsmodul (10) nach einem der vorstehenden Ansprüche, **dadurch gekennzeichnet, dass** es ein Mittel (40) zur Ansteuerung des Laserelements (12) umfasst, das dazu bestimmt ist, die Aussendung des Laserstrahls (14) zu unterbrechen, wenn die Erfassungsvorrichtung (30) eine Intensität erfasst, die größer als der vorbestimmte Schwellenwert ist.

7. Beleuchtungsmodul (10) nach einem der vorstehenden Ansprüche, **dadurch gekennzeichnet, dass** die Leitfläche durch einen sekundären Teil (26B) der reflektierenden Oberfläche (26) gebildet wird.

## Claims

1. Luminous module (10), in particular for a motor vehicle, intended to emit an outgoing light beam (24) and comprising :
- at least one semi-conducting laser element (12) configured to emit a laser beam (14) into a first light cone (16), called an emission cone (16);
- a photoluminescent element (18) configured to convert the wavelength of at least part of said laser beam (14);
- a reflecting surface (26), a main portion (26A) of which reflects light from the photoluminescent element (18) to form said outgoing luminous beam (24) oriented in a first emission direction (A),
- a secondary guide face (26B) which reflects the light from the first emission cone (16) into a second light cone (28), called a measuring cone (28), oriented in a second measuring direction (B) ;
- at least one device (30) for detecting incident light exceeding a predetermined threshold of luminous intensity which is arranged in the measuring cone (28) ;
the optical structure of the guide face (26B) causing the light to spread so that the measuring cone (28) has a larger aperture angle than the first emission cone (16).
**characterized in that** the geometrical profile of the envelope of the guide face (26B) causes the light to spread in the measuring cone (28).

2. Luminous module according to the preceding claim, **characterized in that** the guide face (26B) has grooves (42) which cause the light to spread.

3. Luminous module (10) according to claim 1, **characterized in that** the guide face (26B) has a series of adjacent reflective facets (44) which cause the light to spread.

4. Luminous module (10) according to claim 1, **characterized in that** the guide face (26B) comprises a series of adjacent cushions (46) which cause the light to spread.

5. Luminous module (10) according to any one of claims 1 to 4, **characterized in that** it comprises at least two detection devices (30A, 30B) which are each arranged in the measuring cone (28).

6. Luminous module (10) according to any one of the preceding claims, **characterized in that** it comprises means (40) for driving the laser element (12) which is intended to interrupt the emission of the laser beam (14) when the detection device (30) detects an intensity greater than the predetermined threshold.

7. Luminous module (10) according to any one of the preceding claims, **characterized in that** the guide face is formed by a secondary portion (26B) of the reflecting surface (26).
